# EUROPEAN PATENT SPECIFICATION

(11) **EP 3 138 270 B1**
(45) Date of publication and mention of the grant of the patent: **27.03.2019**
(21) Application number: 15786520.5
(22) Date of filing: 27.04.2015
(51) Int. Cl.: H04M 1/725, H04M 1/2745, G06F 3/0488, G06F 3/0484

(54) **ELECTRONIC DEVICE AND METHOD FOR COMMUNICATION WITH A CONTACT THEREOF**
ELEKTRONISCHE VORRICHTUNG UND VERFAHREN ZUR KOMMUNIKATION MIT EINEM KONTAKT DAVON
DISPOSITIF ÉLECTRONIQUE ET PROCÉDÉ À DES FINS DE COMMUNICATION AVEC UN CONTACT DE CELUI-CI

(30) Priority: 30.04.2014 IN 1170DE2014; 14.04.2015 KR 20150052227
(43) Date of publication of application: 08.03.2017
(73) Proprietor: Samsung Electronics Co., Ltd., Suwon-si, Gyeonggi-do 443-742 (KR)
(72) Inventor: SAXENA, Sumit, Gwalior (M.P) 477445 (IN)
(74) Representative: HGF Limited
(86) International application number: PCT/KR2015/004149
(87) International publication number: WO 2015/167180

(56) References cited:
- EP-A2- 2 713 252
- KR-A- 20060 133 389
- KR-A- 20080 076 412
- US-A1- 2005 182 798
- US-A1- 2009 265 628
- US-A1- 2011 225 539
- US-B1- 6 529 724
- US-B1- 7 231 229

## Description

### Technical Field

The present disclosure relates to selecting communication modes. More particularly, the present disclosure relates to a mechanism for selecting a Frequently Opted Communication Application (FOCA) for communication with a contact stored in an electronic device in response to receiving a gesture event performed on the contact.

### Background Art

The number of communication devices which can allow a user to communicate in several different modes is ever increasing. These different modes of communication include, for example, but not limited to, Short Message Service (SMS), Multimedia Message Service (MMS), electronic mail, Instant Messaging (IM), social network service (SNS), and the like. Generally whenever a user wants to access one of the communication modes in a conventional mobile device, the user has to often pass through various options available in the mobile device.

The above information is presented as background information only to assist with an understanding of the present disclosure. No determination has been made, and no assertion is made, as to whether any of the above might be applicable as prior art with regard to the present disclosure.

US7231229 relates to selecting contact from list with speed dial soft buttons and establishing a communication using a communication mode which may the most frequent recently used.

### Disclosure of Invention

### Technical Problem

Different systems and methods are proposed to automatically select a communication mode suitable for a user. According to the related art, a user may swipe on a contact name to either message or call a person. Further, there are mechanisms to suggest a list of communication modes available on swipe performed on a contact name. Furthermore, there are mechanisms that automatically select the communication mode for communicating between two user devices based on the abilities of the user devices and/or the preferences of the users. However, all these mechanisms are hard coded into the system and are not intuitive to the user, especially when the user actually wants to establish the communication through IM, SMS, MMS, SNS, email, or another mode.

Thus, there is a need in the art for a robust and simple system and method for effectively selecting a communication mode for a user, more particularly when the user desires to establish the communication with the contacts stored in the electronic device through IM, SMS, MMS, SNS, email, or other modes.

### Solution to Problem

Aspects of the present disclosure are to address at least the above-mentioned problems and/or disadvantages and to provide at least the advantages described below. Accordingly, an aspect of the present disclosure is to provide a mechanism for automatically invoking a FOCA for communication with a contact stored in an electronic device in response to receiving a gesture event performed on the contact.

The invention is set out in the appended claims.

Other aspects, advantages, and salient features of the disclosure will become apparent to those skilled in the art from the following detailed description, which, taken in conjunction with the annexed drawings discloses various embodiments of the present disclosure.

### Advantageous Effects of Invention

According to various embodiments, it is possible to reduce time required for initiating a communication mode frequently used in connection with contact. This may increase user experience (UX) for the system.

According to various embodiments, a prompt and direct access to a specific contact is allowed in a phonebook application, a call log application, a chat-on application, or any other application based on the frequency of a specific communication mode in connection with the contact.

According to various embodiments, a prompt and direct access to a specific contact is allowed in a phonebook application, a call log application, a chat-on application, or any other application based on the frequency of a specific communication with the contact using an item.

According to various embodiments, based on the frequency of usage of a specific communication mode, an application or a home appliance, the user convenience may be enhanced when a repeated function or device is used.

### Brief Description of Drawings

The above and other aspects, features, and advantages of certain embodiments of the present disclosure will be more apparent from the following description taken in conjunction with the accompanying drawings, in which:
FIG. 1 illustrates a high level overview of an electronic device for invoking Frequently Opted Communication Application (FOCA) according to an embodiment of the present disclosure;
FIG. 2 illustrates a detailed overview of a FOCA controller and a FOCA database according to an embodiment of the present disclosure;
FIG. 3 illustrates various operations performed by a system according to an embodiment of the present disclosure;
FIG. 4 illustrates an example system block diagram in a mobile operating system environment according to an embodiment of the present disclosure;
FIG. 5 is a flow diagram illustrating a method for automatically displaying an item for communicating with a contact stored in an electronic device;
FIG. 6 is a flow diagram illustrating a method for automatically displaying a contact associated with an item in an electronic device;
FIGS. 7A, 7B, 7C, 7D and 7E illustrate example scenarios of a frequent mode communication associated with a contact in an electronic device according to various embodiments of the present disclosure;
FIGS. 8A, 8B, 8C and 8D illustrate example scenarios of making a user interested application as a default application for a contact according to various embodiments of the present disclosure;
FIGS. 9A, 9B, 9C and 9D illustrate example scenarios of a frequent short range communication invoked for communication with a contact according to various embodiments of the present disclosure;
FIG. 10 illustrates a computing environment implementing a method and a system for automatically displaying an item for communicating with a contact stored in an electronic device;
FIG. 11 is a flow diagram illustrating a method for sharing data of an application that is running;
FIGS. 12A, 12B, and 12C are diagrams illustrating operations of sharing data of an application that is running according to various embodiments of the present disclosure;
FIG. 13 is a flow diagram illustrating a method for executing an application;
FIG. 14 is a diagram illustrating a method for executing an application; and
FIG. 15 is a diagram illustrating operations of controlling various home appliances through a home network.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions are omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The embodiments herein disclose an electronic device for automatically displaying an item for communication with a contact stored in an electronic device.

Throughout the description the terms contact and contact name are used interchangeably. Throughout the description the terms gesture event and interaction event are used interchangeably. Throughout the description, the selection of a communication mode may include selecting a specific communication application or a specific communication function.

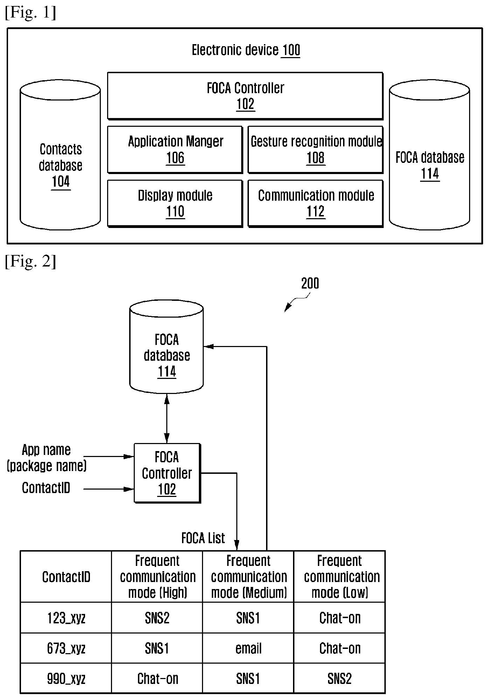

FIGS. 1 through 15, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

Referring now to the drawings, and more particularly to FIGS. 1 through 10, where similar reference characters denote corresponding features consistently throughout the figures, various embodiments are illustrated.

FIG. 1 illustrates a high level overview of an electronic device for invoking a Frequently Opted Communication Application (FOCA), according to an embodiment of the present disclosure.

Referring to FIG. 1, an electronic device 100 is illustrated, where the electronic device 100 can be, for example and not limited to laptop, desktop computer, mobile phone, smart phone, Personal Digital Assistants (PDAs), tablet, phablet, consumer electronic device, server, or any other electronic device. The electronic device 100 can be configured to include a FOCA controller 102, a contacts database 104, an application manager 106, a gesture recognition module 108, a display module 110, a communication module 112, and a FOCA database 114.

In an embodiment, the FOCA controller 102 can be configured to receive an item for communication with a contact stored in the electronic device 100. The contact described herein can be included in a Varian Call Format (VCF) file or a Comma-Separated Values (CSV) file stored in the electronic device 100 having details of a person such as name, mobile number, email, and the like. Each contact can be associated with, for example, but not limited to, a phonebook application, a call log application, a chat-on application, a Social Networking Service (SNS) application, and so on. In an embodiment, the item described herein can be, for example, but not limited to, a Short Message Service (SMS) application, a Multimedia Messaging Service (MMS) application, an Electronic Mail (Email) application, an Instant Message (IM) application, a SNS application, a call application, a short range communication application, a long range communication application, and the like.

Further, the FOCA controller 102 can be configured to track the item used to communicate with the contact in the electronic device 100. Based on the tracked information, the FOCA controller 102 can be further configured to count the frequency of usage of the item associated with the contact. The FOCA controller 102 can be configured to store the frequency of usage of the item for the contact in the FOCA database 114.

According to an embodiment, the FOCA controller 102 can be configured to track an item, contact or setting information associated with an application of the electronic device 100. Based on the tracked information, the FOCA controller 102 can be configured to count the frequency of usage of the item, contact or setting information associated with the application. The FOCA controller 102 can be configured to store the frequency of usage of the item, contact or setting information associated with the application in the FOCA database 114.

In an embodiment, the FOCA database 114 described herein can be stored locally in the electronic device or remotely in the cloud. The FOCA database 114 on the cloud can be used, for example, to synchronize the FOCA information associated with one electronic device of the user with other electronic devices of the user.

Further, the FOCA controller 102 can be configured to add a contact Identification (ID) and the requested item as package name into the FOCA database 114. For example, the contact name can be associated with the contact ID in the electronic device 100. The contact ID can be associated with multiple applications such as Chat-on ID, Video Call, SNS1, SNS2, or the like. Each of the fields can be linked by a common ID in the electronic device 100, called the contact ID. In the event of the gesture performed on the contact ID, such as sending an email then a contact name, a package name and a contact ID are linked by the electronic device 100.

Further, the FOCA controller 102 can be configured to receive the frequency of usage of various items associated with different contacts from the FOCA database 114 after performing the gesture event on the item in the electronic device 100. The FOCA controller 102 can be further configured to identify the contact associated with the item from the frequency of usage of various items associated with different contacts IDs obtained from the FOCA database 114. Further, the FOCA controller 102 can be configured to display the contact on the electronic device 100 as a response to the event performed on the item. Unlike conventional systems, fast access to perform direct actions for a contact name in the Phonebook application, Call log application, Chat-on application, or other applications is achieved based on frequency of particular communication with the contact using the item.

According to an embodiment, the FOCA controller 102 can be configured to receive the frequency of usage of an item, contact or setting information associated with an application from the FOCA database 114 after performing a gesture event for selecting the content of a running application during the execution of the application in the electronic device 100.

According to an embodiment, when receiving a gesture event for selecting an application to be executed in the electronic device, the FOCA controller 102 can execute the application based on a frequently used contact, item or setting information.

According to an embodiment, when receiving a gesture event for selecting specific content during the execution of an application, the FOCA controller 102 can execute a communication mode (e.g., a communication application, such as, for example, SMS, MMS, SNS, IM, email, etc.) frequently used in connection with the application. The FOCA controller 102 can execute a communication mode together with content selected by the gesture event. For example, the FOCA controller 102 can attach such content, as an attached file, selected by the gesture event after executing a communication application.

In an embodiment, the FOCA database 114 can be configured to store the frequency of usage of an item for the contact in the electronic device 100. Further, the FOCA database 114 can be configured to provide the frequency of usage of various items for different contacts to the FOCA controller 102.

In an embodiment, the FOCA database 114 can be configured to store the frequency of usage of a contact associated with an item in the electronic device 100. Further, the FOCA database 114 can be configured to provide the frequency of usage of various contacts associated with the different items to the FOCA controller 102.

In an embodiment, the contacts database 104 can be configured to store various contacts of the user of the electronic device 100. The contacts database 104 can be configured to provide various contacts associated with different users to the FOCA controller 102. In an embodiment, the application manager 106 can be configured to receive the frequent mode of communication item associated with the contact from the FOCA controller 102. The application manager 106 can be configured to launch the frequent mode of communication item associated with the contact in the electronic device 100.

According to an embodiment, based on the frequency of item, contact or setting information associated with an application, the application manager 106 can execute the application. For example, by applying the most frequently used setting information in connection with a specific application, the application manager 106 can execute the application.

In an embodiment, the gesture recognition module 108 can be configured to receive and identify the gesture event performed on the contact in the electronic device 100. The gesture recognition module 108 can be configured to provide the gesture event information performed on the contact to the FOCA controller 102.

In an embodiment, the display module 110 can be configured to display the frequent mode of communication item associated with the contact on the electronic device 100.

The FIG. 1 shows a limited overview of the system but, it is to be understood that another embodiment is not limited thereto. Further, the system can include different modules communicating among each other along with other hardware or software components. For example, the component can be, but not limited to, a process running in the electronic device, an executable process, a thread of execution, a program, and/ or a computer. By way of illustration, both an application running on an electronic device and the electronic device can be the component.

FIG. 2 illustrates a detailed overview of a FOCA controller and a FOCA database according to an embodiment of the present disclosure.

Referring to FIG. 2 detailed overview 200 of a FOCA controller 102 and a FOCA database 114 is illustrated, wherein an application name (e.g., a package name) and a contact ID are given as an input to the FOCA controller 102.

The FOCA controller 102 can be configured to add this information into the FOCA database 114 as the source contact ID, to add a requested intent as a package name and to increase a counter of application occurrences from 0 to n. For example, if an application already has a count then the FOCA controller 102 will increase the counter for that application.

The FOCA database 114 can store a unique contact ID in correspondence with frequent communication applications (e.g., a package name of the application) like Chat-on, SNS, Email, etc. For example, the contact name can be associated with the contact ID in the electronic device 100. The contact ID can be associated with multiple applications such as Chat-on ID, email ID, SNS ID, Video Call or the like. Each of the fields can be linked by a common ID on the electronic device, called the contact ID.

In the event of a gesture being performed on the contact ID, such as sending an email then a contact name a package name and a contact ID are linked by the electronic device 100, as illustrated in FIG. 1. The FOCA database 114 maintains an application priority list for the particular contact ID as high, medium, and low frequency (counter of the application). For example, the contact IDs such as 123_xyz, 673_xyz, and 990_xyz along with the frequent communication applications (e.g., the package names of the application) such as Chat-on, SNS, email, etc. are shown below in Table 1. The frequency of usage of different applications (application intent counter) for each and every contact ID as shown below in the Table 1 can be stored in the FOCA database 114. The count occurrence of the item (example shown in Table 1) can be increased from 0 to n and if an item already has a count then the FOCA controller 102 may increase the count of the occurrence of the item.

### Table 1

**[Table 1]**

| Contact ID : 123_xyz | | Contact ID : 673_xyz | | Contact ID : 990_xyz | |
|---|---|---|---|---|---|
| App Name | Occurrence count | App Name | Occurrence count | App Name | Occurrence count |
| Chat-On | 5 | Chat-On | 2 | Chat-On | 15 |
| SNS1 | 8 | SNS1 | 12 | SNS1 | 9 |
| email | 2 | email | 5 | email | 2 |
| SNS2 | 20 | SNS2 | 4 | SNS2 | 8 |

For example, a FOCA list, as illustrated in FIG. 2, includes the particular contact IDs, such as 123_xyz, 673_xyz, and 990_xyz, and identifies High, Medium, and Low frequency values (e.g., frequency communication modes).

In an embodiment, the application name (e.g., the package name) and the contact ID are provided as an input to the FOCA controller 102, as shown in the FIG. 2. When an intent call from the item enables the contact to communicate through the item, the FOCA controller 102 can add this information into the FOCA database 114 as the item and requested contact and can increase the counter of the contact occurrences from 0 to n. If a contact already has a count then the FOCA controller 102 will increase the counter. The FOCA database 114 can store the item with frequently communicated contacts. The FOCA database 114 maintains the contact priority list for the particular item as high, medium, and low frequency. For example, the applications such as Chat-on (e.g., an instant message application, or the like), SNS1, and email along with contact IDs such as 456_xyz, 324_xyz, and 879_xyz are shown below in Table 2.

### Table 2

**[Table 2]**

| App name : Chat-on | | App name : SNS1 | | App name : email | |
|---|---|---|---|---|---|
| Contact ID | Occurrence count | Contact ID | Occurrence count | Contact ID | Occurrence count |
| 456_xyz | 5 | 456_xyz | 2 | 456_xyz | 15 |
| 324_xyz | 8 | 324_xyz | 12 | 324_xyz | 9 |
| 879_xyz | 2 | 879_xyz | 5 | 879_xyz | 2 |

For example, the contact priority list for the particular application as High, Medium, and Low frequency is stored in the FOCA list as shown in Table 3. Further, in an embodiment, the FOCA controller 102 can allow the user to manually prioritize the list pursuant to the requirement.

### FOCA List

### Table 3

**[Table 3]**

| App name | Frequent Communication Mode (high) | Frequent Communication Mode (medium) | Frequent Communication Mode (Low) |
|---|---|---|---|
| Chat-on | 456_xyz | 879_xyz | 324_xyz |
| SNS1 | 324_xyz | 456_xyz | 879_xyz |
| Email | 879_xyz | 324_xyz | 456_xyz |

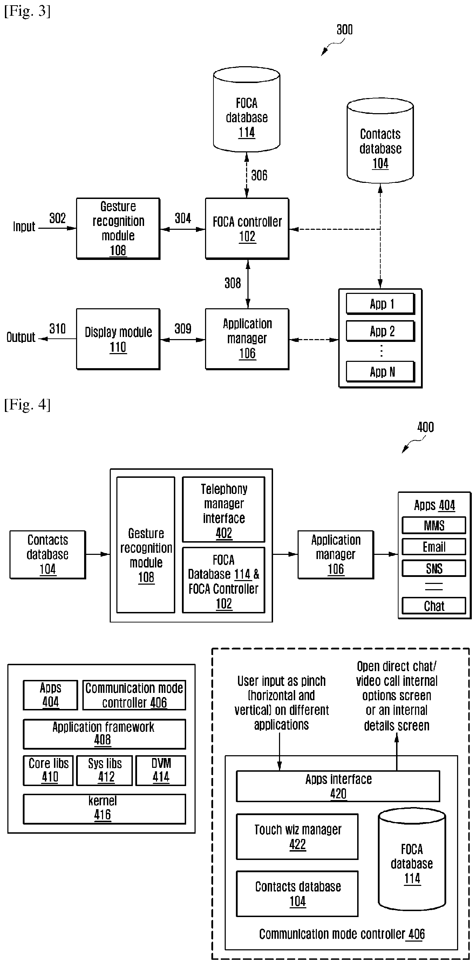

FIG. 3 illustrates various operations performed by a system according to an embodiment of the present disclosure.

Referring to FIG. 3, a system 300 is illustrated, such that at input 302, a gesture recognition module 108 can receive an input from the user. The input can be a gesture event such as a swipe or slide gesture performed on the contact in the electronic device 100, as illustrated in FIG. 1.

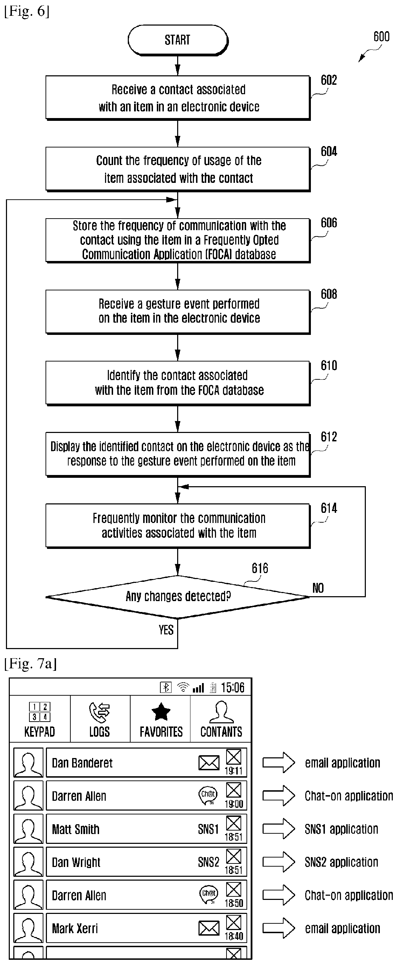

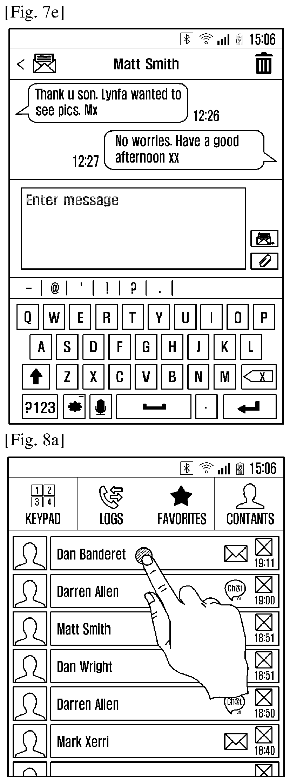

A slide listener can receive the input from the gesture recognition module 108. At 304, the gesture recognition module 108 can be configured to send a request to the FOCA controller 102 to receive the list of frequent communication mode applications and then decide which application can be opened as a response to the gesture performed on the contact in the electronic device 100. In an embodiment, a user interface (UI) icon represent the frequent communication mode for the contact which may provide an hint to the user that the frequent communication mode for the particular contact is a Chat-on, email, or the like. The user can be able to manage the frequent communication mode associated with the contact list by selecting and reshuffling the list content (Refer to FIGS. 7A-7E, and FIGS. 8A-8D).

Further, at 306, the FOCA controller 102 can be configured to receive the frequency of usage of various applications associated with different contacts from the FOCA database 114. Further, the FOCA controller 102 can be configured to identify the application for communication with the contact from the frequency of usage of various applications associated with different contacts obtained from the FOCA database 114. Further, a contacts database 104 may provide information regarding various users of the electronic device 100 to the FOCA controller 102.

At 308, an application manager 106 can be configured to receive the frequent mode of communication applications associated with the contact (e.g., a communication application frequently used in connection with the contact, etc.) from the FOCA controller 102 and automatically launch the application (e.g., App 1, App 2, App N, etc.) associated with the contact in the electronic device 100.

At 309 a display module 110 may receive information regarding the application associated with the contact.

At 310, the display module 110 can be configured to display the application associated with the contact on the electronic device 100 as part of the output.

FIG. 4 illustrates an example system block diagram in a mobile operating system environment according to an embodiment of the present disclosure.

Referring to FIG. 4, a system 400 is illustrated, where the system 400 includes a FOCA database 114 and a FOCA controller 102 for managing frequent applications and storing information. Upon performing a gesture event on a contact that is stored in a contacts database 104, the FOCA database 114 and the FOCA controller 102 can be configured to determine an appropriate application for sending a request to an application manager 106 to open/manage other applications with the contact.

Moreover, a gesture recognition module 108 can be configured to track the gesture event performed on the contact in the contact application or the call log application. A telephony manager interface 402 can be configured to allow access to the telephony manager to perform other telephony related functions like MMS. The FOCA database 114 can be configured to store the application name (i.e. package name) occurrence counter with an associated contact ID as shown in Table 1.

Further, the FOCA controller 102 can be enabled to add the source contact ID and requested intent as package name and increase occurrences of the counter from 0 to n. Further, the application manager 106 can be enabled to call the associated application such as to launch the application with related contact.

Additionally, the system 400 may include apps 404, such as MMS, email, SNS, Chat-on, etc., and may also include a communication mode controller 406, application framework 408, a core library (libs) 410, a system library (libs) 412 a Dalvik Virtual Machine (DVM) 414, and a kernel 4216. Also, the communication mode controller 406 may include a frequent application (apps) and action database 114, the contacts database 104, a touch wiz manager 422 and an application (apps) interface 420 that may receive a user input such as a pinch on different applications and may open a direct chat/video call internal options screen or an internal details screen.

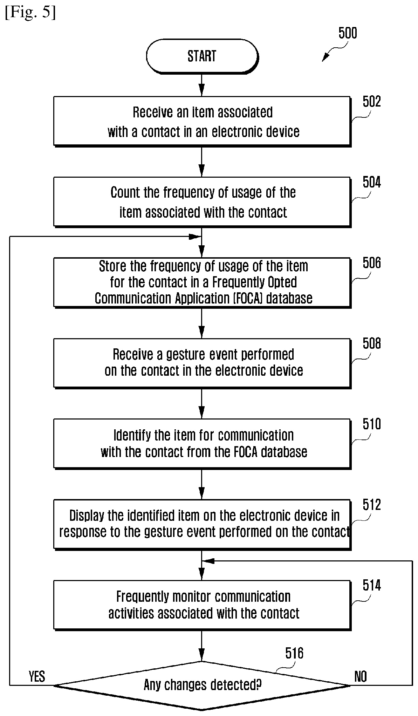

FIG. 5 is a flow diagram illustrating a method for automatically displaying an item for communicating with a contact stored in an electronic device 100.

Referring to FIG. 5, a method 500 is illustrated, such that at operation 502, the method 500 includes receiving an item associated with a contact in the electronic device 100 as illustrated in FIG. 1. The method 500 allows the FOCA controller 102, as illustrated in FIG. 1, to receive the item associated with the contact in the electronic device 100. The item for communication with the contact is provided after performing a gesture event on the contact in the electronic device 100. In an embodiment, the gesture event described herein can be, for example, but not limited to, a swipe gesture, a slide gesture, a tap gesture, a voice gesture, a hover gesture, and the like.

At operation 504, the method 500 includes counting a frequency of usage of the item associated with the contact. The method 500 allows the FOCA controller 102 to track the item used to communicate with the contact in the electronic device 100. Further, the method 500 allows the FOCA controller 102 to count the frequency of usage of the item associated with the contact in the electronic device 100.

At operation 506, the method 500 includes storing the frequency of usage of the item for the contact in the FOCA database 114, as illustrated in FIG. 1.

At operation 508, the method 500 includes receiving the gesture event performed on the contact in the electronic device 100. The method 500 allows the gesture recognition module 108, as illustrated in FIG. 4, to receive and identify the gesture event performed on the contact in the electronic device 100. Further, the method 500 allows the gesture recognition module 108 to provide the gesture event to the FOCA controller 102.

At operation 510, the method 500 includes identifying the item for communication associated with the contact from the FOCA database 114. The method 500 allows the FOCA controller 102 to identify the item for communication with the contact from the FOCA database 114.

At operation 512, the method 500 includes displaying the identified item on the electronic device 100 in response to the gesture event performed on the contact. The method 500 allows the display module 110 to display the identified item on the electronic device 100 for the gesture event on the contact.

At operation 514, the method 500 includes frequently monitoring communication activities associated with the contact in the electronic device 100. The method 500 allows the FOCA controller 102 to frequently monitor the communication activities associated with the contact.

At operation 516, the method 500 includes determining whether any changes are detected in the communication activities associated with the contact. Further, the method includes repeating the operations 506 to 516 in response to detecting any change in the communication activities associated with the contact. Additionally, if no changes are detected in operation 516, the method 500 returns to operation 514.

The various actions, acts, blocks, steps, and the like in method 500 may be performed in the order presented, in a different order or simultaneously. Further, in some embodiments, some actions, acts, blocks, steps, and the like may be omitted, added, modified, skipped, and the like without departing from the scope of the present disclosure.

FIG. 6 is a flow diagram illustrating a method for automatically displaying a contact associated with an item in an electronic device.

Referring to FIG. 6, a method 600 is illustrated, such that at operation 602, the method 600 includes receiving a contact associated with an item in the electronic device 100, as illustrated in FIG. 1. The method 600 allows the FOCA controller 102, as illustrated in FIG. 1, to receive the contact associated with the item in the electronic device 100. The method 600 provides the contact for communicating through the item after performing a gesture event on the item in the electronic device 100. In an embodiment, the gesture event described herein can be, for example, but not limited to, a swipe gesture, a tap gesture, a slide gesture, a voice gesture, a hover gesture, and the like.

At operation 604, the method 600 allows counting of a frequency of usage of the item associated with the contact. The method 600 allows the FOCA controller 102 to track the communication to the contact associated with the item in the electronic device 100. Further, the method 600 allows the FOCA controller 102 to count the frequency of usage of the item associated with the contact in the electronic device 100.

At operation 606, the method 600 includes storing the frequency of communication with the contact using the item in the FOCA database 114, as illustrated in FIG. 1. The method 600 allows the FOCA controller 102 to track the item used to communicate with the contact in the electronic device 100. Based on the tracked information, the method 600 allows the FOCA controller 102 to count the frequency of usage of the item associated with the contact in the electronic device 100. Further, the method 600 allows the FOCA controller 102 to store the frequency of usage of the item for the contact in the FOCA database 114.

At operation 608, the method 600 includes receiving the gesture event performed on the item in the electronic device 100. The method 600 allows the gesture recognition module 108 to receive and identify the gesture event on the item in the electronic device 100. Further, the method 600 allows the gesture recognition module 108 to the identified gesture event to the FOCA controller 102.

At operation 610, the method 600 includes identifying the contact associated with the item from the FOCA database 114. The method 600 allows the FOCA controller 102 to identify the contact to communicate using the item from the FOCA database 114.

At operation 612, the method 600 includes displaying the identified contact on the electronic device 100 as a response to the gesture event performed on the item. The method 600 allows the display module 110 to display the identified contact on the electronic device 100 for the gesture event performed on the item. Unlike related systems, the frequent mode of communication with the contact using the item can be displayed on the electronic device 100.

At operation 614, the method 600 includes frequently monitoring communication activities associated with the item in the electronic device 100. The method 600 allows the FOCA controller 102 to frequently monitor the communication activities associated with the item.

At operation 616, the method 600 includes determining whether any changes are detected in the communication activities associated with the item. Further, the method 600 includes repeating the operations 606 to 616 in response to determining any changes in the communication activities associated with the item. Otherwise, if no changes are detected in operation 616 the method returns to operation 614.

The various actions, acts, blocks, steps, and the like in method 600 may be performed in the order presented, in a different order or simultaneously. Further, in some embodiments, some actions, acts, blocks, steps, and the like may be omitted, added, modified, skipped, and the like without departing from the scope of the present disclosure.

FIGS. 7A-7E illustrate example scenarios of a frequent mode communication item associated with a contact in an electronic device according to various embodiments of the present disclosure.

Referring to FIG. 7A, items are illustrated along with various contacts in a call log list of the electronic device 100, as illustrated in FIG. 1, are displayed on the electronic device 100.

For example, the item "email application" is displayed as a frequent mode of communication for the contact "Dan Banderet," and "Mark Xerri." The item "Chat-on application" is displayed as a frequent mode of communication for the contact "Darren Allen." The item "SNS1 application" is displayed as a frequent mode of communication for the contact "Matt Smith." The item "SNS2 application" is displayed as a frequent mode of communication for the contact "Dan Wright."

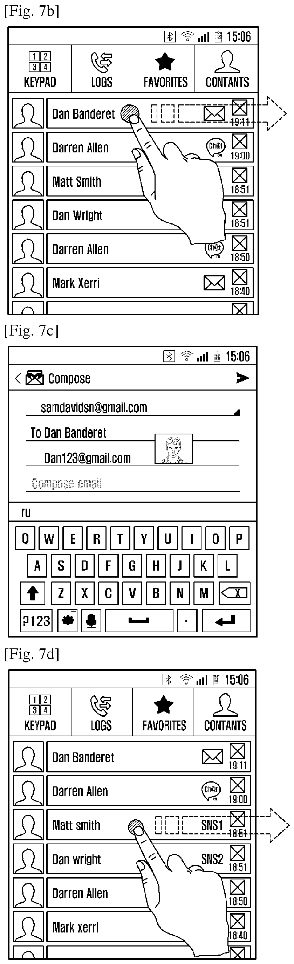

Referring to FIG. 7B, if a gesture event is performed on the contact "Dan Banderet" for communication, then the item "email application" can be automatically launched as a suitable communication mode to send a message to the contact "Dan Banderet" as shown in FIG. 7C.

Referring to FIG. 7D, if a gesture event is performed on the contact "Matt Smith" for communication, then the item "SNS1 application" can be automatically launched as a suitable communication mode to send a message to the contact "Matt Smith" as shown in FIG. 7E.

FIGS. 8A-8D illustrate example scenarios of making a user interested application as a default application for a contact according to various embodiments of the present disclosure.

When more than one mode of communication is associated with the contact "Dan Banderet" with a same frequency, a list of actions can be shown to the user to choose upon on performing the gesture event.

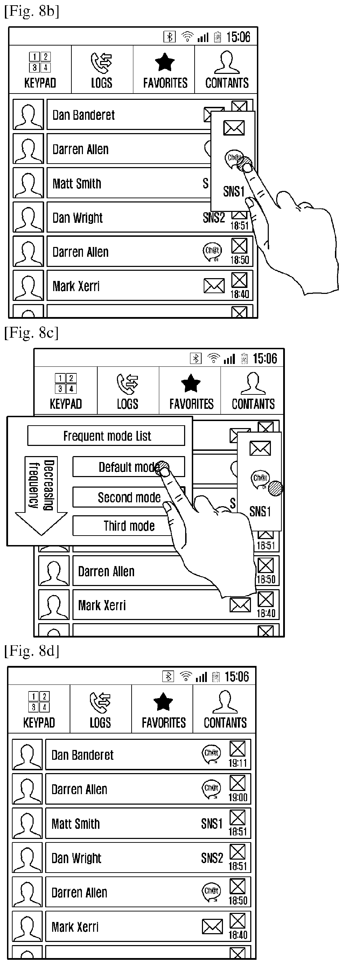

Referring to FIG. 8A, if a gesture event is performed on the contact "Dan Banderet" then a list of frequent communication mode indicator like email, chat-on, SNS, and the like can be displayed as shown in FIG. 8B. The FOCA controller 102, as illustrated in FIG. 1, can allow the user to configure the priority for the desired communication modes.

Referring to FIG. 8C, a frequent mode list can include high, medium, and low frequency modes of communication, so as to allow the user to change the priority of frequent communication mode.

Referring to FIGS. 8C and 8D, the preferred communication mode associated with the contact "Dan Banderet" can be changed to the application "Chat-on" by performing gesture event on the application. In an embodiment, where the IM is selected as the preferred communication for the contact, the FOCA controller 102 can be configured to check the availability of the user. If the contact is available online then the IM is selected as the preferred mode of communication with the other contact, unless another communication mode is selected from the list. Further, in an embodiment, the FOCA controller 102 can allow the user to manually priorities the list pursuant to the user requirement.

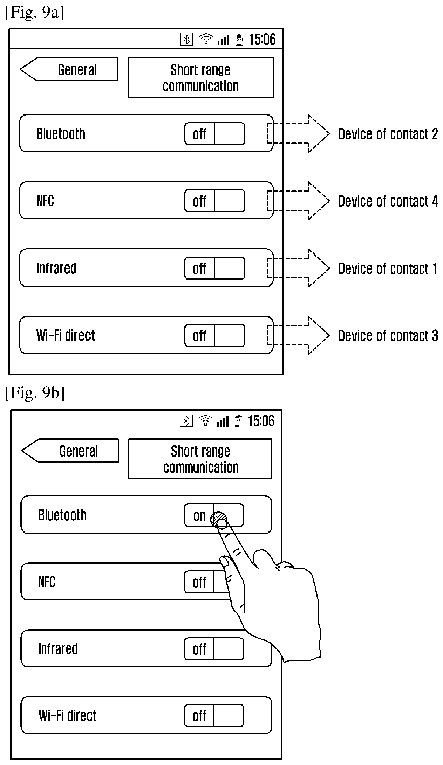

FIGS. 9A-9D illustrate example scenarios of a frequent short range communication invoked for communication with a contact according to various embodiments of the present disclosure. In an embodiment, short range communication applications can be launched for the device of the contacts paired with the electronic device 100, as illustrated in FIG. 1.

Referring to FIG. 9A, various short range communication applications, which are associated with one or more paired devices, are displayed on the electronic device 100. For example, the "device of contact 2" is displayed along with the short range communication "Bluetooth" indicating that the most frequent communication mode for the contact 2 is Bluetooth. The "device of contact 4" is displayed along with the short range communication "Near Field Communication (NFC)" indicating that the most frequent communication mode for the contact 4 is NFC. The "device of contact 1" is displayed along with the short range communication "Infrared" indicating that the most frequent communication mode for the contact 1 is Infrared. The "device of contact 3" is displayed along with the short range communication "Wi-Fi direct" indicating that the most frequent communication mode for the contact 3 is Wi-Fi direct.

In an embodiment, the FOCA controller 102, as illustrated in FIG. 1, can allow the user to select or prioritize the paired devices for communication with the contacts using a short range communication.

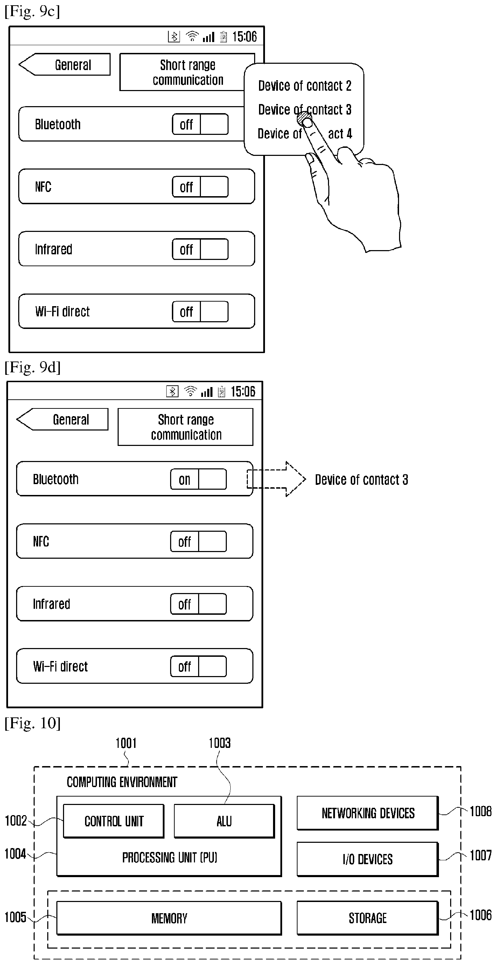

Referring to FIGS. 9B and 9C, Bluetooth can be turned on, and Bluetooth can be associated with the device of contact 2, the device of contact 3, and the device of contact 4. The user can prioritize the devices for communication. For example as shown in the FIG. 9D, the user select the device of contact 3 as a preferred mode of communication, such that the FOCA controller 102 can automatically invoke the Bluetooth application for communication as a response to gesture operation performed on the contact 3.

FIG. 10 illustrates a computing environment implementing a method and a system for automatically displaying an item for communicating with a contact stored in an electronic device.

Referring to FIG. 10, a computing environment 1001 is illustrated, where the computing environment 1001 comprises at least one processing unit 1004 that is equipped with a control unit 1002 and an Arithmetic Logic Unit (ALU) 1003, a memory 1005, a storage unit 1006, plurality of networking devices 1008 and a plurality Input/Output (I/O) devices 1007. The processing unit 1004 is responsible for processing the instructions of the algorithm. The processing unit 1004 receives commands from the control unit in order to perform its processing. Further, any logical and arithmetic operations involved in the execution of the instructions are computed with the help of the ALU 1003.

The overall computing environment 1001 can be composed of multiple homogeneous and/or heterogeneous cores, multiple CPUs of different kinds, special media and other accelerators. The processing unit 1004 is responsible for processing the instructions of the algorithm. Further, the plurality of processing units 1004 may be located on a single chip or over multiple chips.

The algorithm comprising of instructions and codes required for the implementation are stored in either the memory unit 1005 or the storage 1006 or both. At the time of execution, the instructions may be fetched from the corresponding memory 1005 and/ or storage 1006, and executed by the processing unit 1004.

In case of any hardware implementations various networking devices 1008 or external I/O devices 1007 may be connected to the computing environment to support the implementation through the networking unit and the I/O device unit.

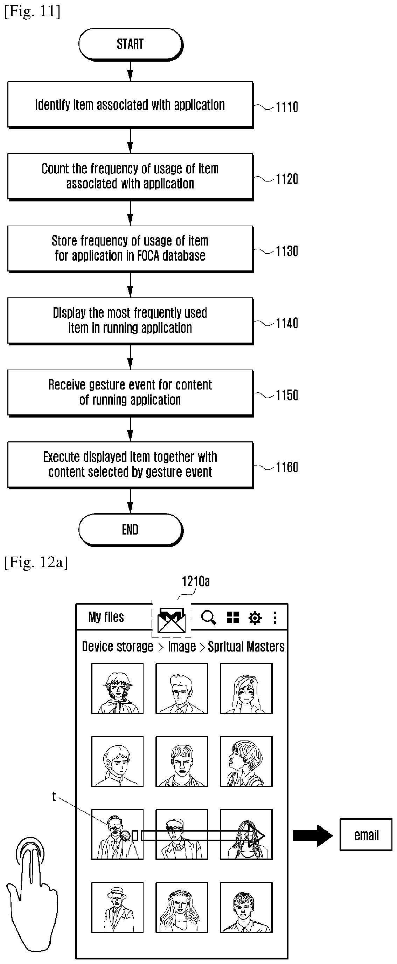

FIG. 11 is a flow diagram illustrating a method for sharing data of an application that is running.

At operation 1110, the electronic device 100, as illustrated in FIG. 1, may identify an item associated with an application that is running. For example, the electronic device 100 may identify a communication mode associated with a running application. For example, the electronic device 100 may identify an item (a communication mode or a communication application) which is executable by interworking with an application that is running. For example, if a gallery (photo) application is executed, the electronic device 100 may identify an item such as email, SNS, SMS, MMS, IM, or the like which can transmit content by interworking with the gallery application.

At operation 1120, the electronic device 100 may count a frequency of usage of the item associated with the application. For example, the electronic device may count the frequency of usage of the item (e.g., email, chat-on, IM, etc.) used during the execution of the gallery application. For each application, the electronic device may count the frequency of the item used during the execution of the application.

At operation 1130, the electronic device 100 may store the frequency of usage of the item for each application in the FOCA database 114, as illustrated in FIG. 1. For example, the electronic device 100 may store the frequency of usage of items used by interworking with each application. According to an embodiment, the electronic device 100 may store the frequency of usage of the item in another database or any external storage (e.g., a suitable external server) in addition to the FOCA database 114.

At operation 1140, the electronic device 100 may display the most frequently used item in an application that is running. For example, when executing a specific application, the electronic device 100 may display the most frequently used item in connection with the application on at least part of the execution screen of the application. Based on the frequency of usage of the item stored in the database, the electronic device 100 may identify the most frequently used item and display the identified item on the application execution screen.

At operation 1150, the electronic device 100 may receive a gesture event for specific content of the application that is running. For example, the electronic device 100 may receive a gesture event for selecting specific photo content during the execution of a gallery application. In another example, the electronic device 100 may receive a gesture event for selecting specific music content during the execution of a music application. Such a gesture event may include, but not limited to, a touch input such as tap, drag, swipe, or the like.

At operation 1160, the electronic device 100 may execute the item displayed on the screen together with the content selected by the gesture event. For example, if the SNS item is displayed as the most frequently used item during the execution of the gallery application, and if a gesture event for selecting specific photo content is received, then the electronic device 100 may execute the SNS application and automatically attach the selected photo content. In another example, if the IM item is displayed as the most frequently used item during the execution of the multimedia application, and if a gesture event for selecting specific video (multimedia) content is received, then the electronic device 100 may execute the IM application and automatically attach the selected video content.

According to various embodiments, for each application, the most frequently used item may be displayed on the screen. Further, if a gesture event for selecting specific content is received during the execution of an application, then the most frequently used item may be executed together with the selected content. Additionally, contents of various applications may be shared with another person (other device) by means of a simple action. Moreover, the most frequently used item in connection with a running application may be used simply and intuitively. This may enhance a user's convenience.

FIGS. 12A-12C are diagrams illustrating operations of sharing data of an application that is running according to various embodiments of the present disclosure.

Referring to FIG. 12A, an email item 1210a and operations of sharing photo content while a gallery application is executed are illustrated. In FIG. 12A, the most frequently used item is the email item 1210a among items associated with the gallery application.

When the gallery application is executed, the electronic device 100, as illustrated in FIG. 1, may identify the most frequently used item among items associated with the gallery application. Then the electronic device 100 may display the most frequently used item, e.g., the email item 1210a, on a part of the screen of the gallery application.

When the gallery application is executed, the electronic device 100 may receive a gesture event (t) for selecting specific photo content. Although FIG. 12A shows a swipe gesture for example, any other touch input may be used as the gesture event (t).

In response to the received gesture event, the electronic device 100 may execute the email item (e.g., the email application) 1210a so as to transmit the selected photo content. According to an embodiment, after executing the email application, the electronic device 100 may display a new email screen with the selected photo content attached. According to an embodiment, the electronic device 100 may check the frequency of usage of contacts associated with the email and then automatically assign the most frequently used contact to the recipient of the email.

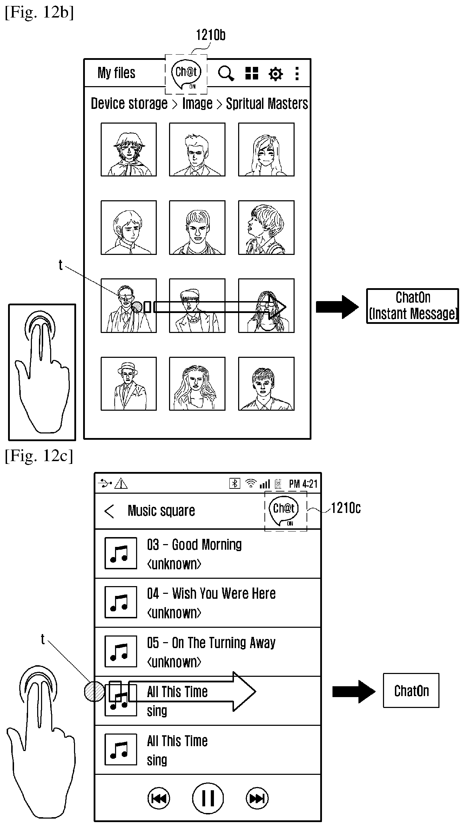

Referring to FIG. 12B, a case in which a most frequently used item is a chat-on item (an IM item) 1210b, among items associated with the gallery application, is illustrated.

When the gallery application is executed, the electronic device 100, as illustrated in FIG. 1, may identify the most frequently used item among items associated with the gallery application. Then the electronic device 100 may display the most frequently used item, e.g., the chat-on item 1210b, on a part of the screen of the gallery application.

When the gallery application is executed, the electronic device 100 may receive a gesture event (t) for selecting specific photo content.

In response to the received gesture event (t), the electronic device 100 may execute the chat-on item (e.g., the chat-on or IM application) 1210b so as to transmit the selected photo content. According to an embodiment, after executing the chat-on application, the electronic device 100 may display a chat-on screen with the selected photo content attached. According to an embodiment, the electronic device 100 may check the frequency of usage of contacts associated with the chat-on item and then automatically assign the most frequently used contact to the partner of the chat-on item.

Referring to FIG. 12C, operations of sharing music content while a music application is executed are illustrated. Specifically, referring to FIG. 12C, a most frequently used item is an IM item (e.g., a chat-on item) 1210c among items associated with the music application.

When the music application is executed, the electronic device 100, as illustrated in FIG. 1, may identify the most frequently used item among items associated with the music application. Then the electronic device 100 may display the most frequently used item, e.g., the chat-on item 1210c, on a part of the screen of the music application.

When the music application is executed, the electronic device 100 may receive a gesture event (t) for selecting specific music content.

In response to the received gesture event (t), the electronic device 100 may execute the chat-on item so as to transmit the selected music content. According to an embodiment, after executing the chat-on application, the electronic device 100 may automatically attach the selected music content as an attached file. According to an embodiment, the electronic device 100 may check the frequency of usage of contacts associated with the chat-on item and then automatically assign the most frequently used contact to the partner of the chat-on item.

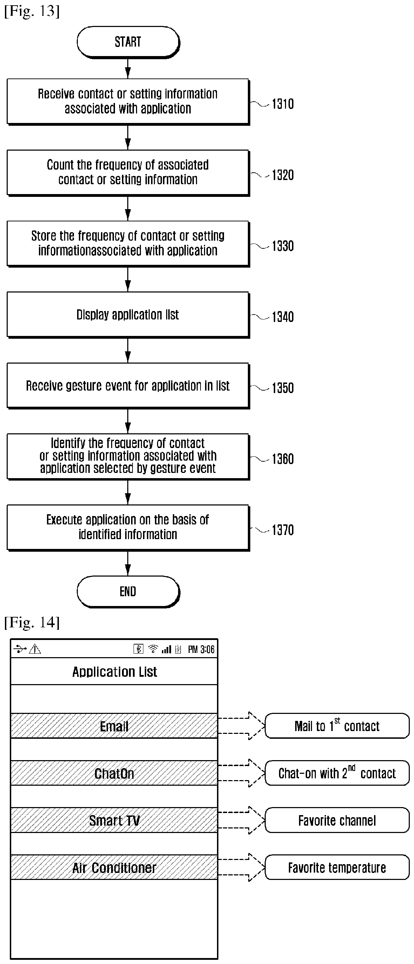

FIG. 13 is a flow diagram illustrating a method for executing an application.

Referring to FIG. 13, at operation 1310, the electronic device 100, as illustrated in FIG. 1, may receive a contact or setting information associated with an application. For example, the electronic device 100 may receive the contact associated with a communication application (e.g., SMS, MMS, SNS, email, IM, etc.). Also, the electronic device 100 may receive setting information associated with an application for controlling a certain external electronic device (e.g., home appliances). For example, the electronic device 100 may receive setting information for changing a channel of a smart Television (TV) in connection with a smart TV control application. Also, the electronic device 100 may receive setting information for changing a temperature of air conditioner in connection with an air conditioner control application.

At operation 1320, the electronic device 100 may count a frequency of the contact or setting information associated with the application. For example, the electronic device 100 may count the frequency of contact or setting information (e.g., a setting value) used for each application.

At operation 1330, the electronic device 100 may store the frequency of the contact or setting information used for each application.

At operation 1340, the electronic device 100 may display a list of usable applications. For example, the electronic device 100 may display a list of application names. Additionally or alternatively, the electronic device 100 may display a screen on which execution icons of applications are arranged.

At operation 1350, the electronic device 100 may receive a gesture event for a specific application in the displayed list. For example, the electronic device 100 may receive a touch input or a gesture input for executing a specific application. Namely, at least one of various touch inputs or gesture inputs, such as tap, swipe, flick, drag, or the like, may be used as the gesture event.

At operation 1360, the electronic device 100 may identify the frequency of the contact or setting information associated with the application selected by the gesture event. For example, the electronic device 100 may identify the most frequently used contact or setting information in the application for which the gesture event is received.

At operation 1370, the electronic device 100 may execute an application based on the identified information. For example, if the first contact is the most frequently used contact in the email application, the electronic device 100 may display a screen of a new email to be sent to the first contact. Namely, the electronic device 100 may automatically assign the first contact to the recipient of email and execute the email application. In another example where a smart TV application is executed, the electronic device 100 may identify information about the most frequently used favorite channel and then control the smart TV application such that a smart TV changes the channel to the favorite channel.

For example, when executing a vacuum cleaner application, the electronic device 100 may identify information about the most frequently used cleaning cycle and then control the application such that a vacuum cleaner changes the cleaning cycle to the identified cycle. In case of executing a home theater application, the electronic device 100 may identify the most frequently used setting information (e.g., screen setting information, screen mode, sound mode, etc.) and control the application such that a home theater operates according to the identified setting information.

According to various embodiments, by storing the frequency of setting information associated with an application, the electronic device 100 may execute the application based on the frequently used setting information without requiring a complicated process. Therefore, through an application for controlling home appliances, the electronic device 100 may simply control the home appliances in the home network without requiring user's complicated and individual manipulations.

FIG. 14 is a diagram illustrating a method for executing an application.

Referring to FIG. 14, an electronic device 100, as illustrated in FIG. 1, may display a list of executable applications. For example, the electronic device 100 may display a list of email, IM (e.g., chat-on), smart TV, and air conditioner applications.

The electronic device 100 may identify the frequency of contact or setting information associated with each application arranged in the list. For example, the electronic device 100 may ascertain that the first contact has the highest frequency in connection with the email application. Similarly, the electronic device 100 may ascertain that the second contact has the highest frequency in connection with the IM application. Further, the electronic device 100 may ascertain setting information having the highest frequency in connection with the smart TV application. For example, the electronic device 100 may ascertain information about a channel set to have the highest frequency by a user when the smart TV application is executed. Similarly, the electronic device 100 may ascertain information about a temperature set to have the highest frequency by a user when the air conditioner application is executed. According to an embodiment, for each application, the electronic device 100 may store the frequency of usage of contact associated with the application and the frequency of setting information (e.g., setting values associated with the application). The electronic device 100 may identify such stored frequencies when the application is executed.

The electronic device 100 may execute the application, based on the identified frequency of usage of contact or the identified frequency of setting information. For example, if a user's input for executing the email application in the list is received, the electronic device 100 may automatically display a new mail screen for the first contact which is the most frequently used contact in connection with the email. For example, when the email application is executed, the electronic device 100 may display such a new mail screen for the first contact. If a user's input for executing the chat-on application in the list is received, the electronic device 100 may automatically display a chat-on screen for the second contact which is the most frequently used contact in connection with the chat-on application. For example, when the chat-on application is executed, the electronic device 100 may display such a chat-on screen for the second contact.

According to various embodiments, the electronic device 100 may control various smart home appliances, using the home network. For example, the electronic device 100 may control various electronic devices such as a smart TV, an air conditioner, a microwave oven, a washing machine, or a refrigerator through a suitable application for controlling home appliances.

Referring to FIG. 14, when a user's input for executing a smart TV application in the list is received, the electronic device 100 may execute a selected application based on the most frequently used setting information (e.g., channel information) in connection with the smart TV application. For example, the electronic device 100 may execute and control the smart TV application to turn on the smart TV with the most frequently used channel (e.g., the favorite channel) or to change the channel of the smart TV to the favorite channel. In case a user's input for executing an air conditioner application in the list is received, the electronic device 100 may execute a selected application based on the most frequently used setting information (e.g., temperature information) in connection with the air conditioner application. For example, the electronic device 100 may execute and control the air conditioner application to operate the air conditioner at the most frequently used temperature (e.g., the favorite temperature) or to change the temperature of the air conditioner to the favorite temperature.

According to various embodiments, types of applications may be not limited to examples shown in FIG. 14, and any other application may be executed depending on the frequency of usage of contact or setting information associated with such an application.

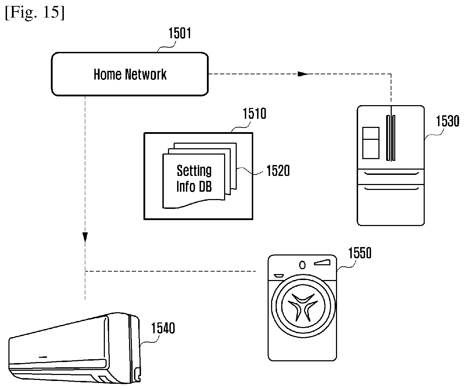

FIG. 15 is a diagram illustrating operations of controlling various home appliances through a home network.

Referring to FIG. 15, an electronic device 1510 is illustrated, where the electronic device 1510 may be connected with various home appliances 1530, 1540 and 1550 through a home network 1501. For example, the electronic device 100, as illustrated in FIG. 1, may be connected with a refrigerator 1530, an air conditioner 1540, and a washing machine 1550 through the home network 1501.

Referring to FIG. 15, the electronic device 100 may be further connected with any other home appliance such as a microwave oven or a smart TV through the home network 1501.

The electronic device 1510 may include a database (e.g., a setting information database) 1520 that stores therein setting information. According to an embodiment, the electronic device 1510 may store setting information in an internal or external memory or in an external database or server.

The electronic device 1510 may include applications for controlling various home appliances. Using such applications, the electronic device 1510 may control the home appliances and setting values thereof. The electronic device 1510 may store setting information, together with the frequency thereof, associated with applications for controlling the home appliances in the setting information database 1520. For example, the electronic device 1510 may store the frequency of each setting temperature in connection with an air conditioner control application.

Also, in connection with a refrigerator control application, the electronic device 1510 may store the frequency of each setting temperature and the frequency of each setting mode. Also, in connection with a smart TV control application, the electronic device 1510 may store the frequency of each channel and the frequency of each setting mode (e.g., Audio Video (AV)/TV/High Definition Multimedia Interface (HDMI) etc.). Also, in connection with a washing machine control application, the electronic device 1510 may store the frequencies of each setting mode, each motor speed, and each washing type. And also, in connection with a microwave oven control application, the electronic device 1510 may store the frequencies of each cooking mode and each setting time.

When executing a specific application, so as to control the home appliance, the electronic device 1510 may identify, from the database, the setting information associated with the specific application or the frequency of the setting information. Using the identified setting information or the like, the electronic device 1510 may execute the application and control the related home appliance. For example, when executing a washing machine control application, the electronic device 1510 may identify the most frequently used setting information in connection with the washing machine control application. For example, the electronic device 1510 may execute the washing machine control application, based on setting values of the most frequently used motor speed and washing type.

Furthermore, for example, when executing an air conditioner control application, the electronic device 1510 may identify the most frequently used setting temperature and then control the air conditioner 1540 to operate at the identified temperature. In case of executing a microwave oven control application, the electronic device 1510 may control the microwave oven to operate based on the most frequently used cooking mode and time.

According to various embodiments, when controlling the home appliances through the home network, the electronic device 1510 may store and utilize setting information, together with the frequency thereof, associated with applications for controlling the home appliances. This may reduce the burden of user's repeated manipulations and also enhance user's convenience.

According to various embodiments, it is possible to reduce time required for initiating a communication mode frequently used in connection with contact. This may increase user experience (UX) for the system.

According to various embodiments, a prompt and direct access to a specific contact is allowed in a phonebook application, a call log application, a chat-on application, or any other application based on the frequency of a specific communication mode in connection with the contact.

According to various embodiments, a prompt and direct access to a specific contact is allowed in a phonebook application, a call log application, a chat-on application, or any other application based on the frequency of a specific communication with the contact using an item.

According to various embodiments, based on the frequency of usage of a specific communication mode, an application or a home appliance, the user convenience may be enhanced when a repeated function or device is used.

The embodiments disclosed herein can be implemented through at least one software program running on at least one hardware device and performing network management functions to control the elements. The elements shown in FIGS. 1, 2 and 10 include blocks which can be at least one of a hardware device, or a combination of hardware device and software module.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

## Claims

1. An electronic device (100) for executing at least one item for communication with at least one contact, the electronic device comprising:
a controller (102) configured to:
store a frequency of usage of at least one item for the at least one contact in a database (114);
display the at least one item along with the at least one contact in at least one contact list of the electronic device,
wherein the at least one item is selected for display from the database based on the frequency of the usage of the at least one item,
receive at least one interaction event performed on the at least one contact in the electronic device;
identify the at least one item for communication with the at least one contact from the database; and
execute the at least one identified item, based on the frequency of the usage of the at least one identified item, as a response to the at least one interaction event performed on the at least one contact.

2. The electronic device of claim 1, wherein the at least one item comprises at least one of a short message service application, a multimedia service application, an electronic mail application, an instant message application, a social network service application, a call application, a short range communication application, and long range communication application.

3. The electronic device of claim 1, wherein the controller is further configured to store the frequency of the usage by:
tracking the at least one item used to communicate with the at least one contact in the electronic device;
counting the frequency of usage of the at least one item associated with the at least one contact based on the tracking; and
storing the frequency of the usage of the at least one item for the at least one contact in database.

4. The electronic device of claim 1, further comprising:
the controller configured to:
store a frequency of communication with the at least one contact using each item in a database;
receive at least one event performed on the at least one item in the electronic device;
identify the at least one contact associated with the at least one item from the database, based on the frequency of the communication with the at least one contact; and
communicate with the at least one identified contact by using the at least one item selected by the received interaction event, as a response to the received interaction event performed on the at least one item.

5. The electronic device of claim 4, wherein the at least one item comprises at least one of a short message service application, a multimedia service application, an electronic mail application, an instant message application, a social network service application, a call application, a short range communication application, and long range communication application.

6. The electronic device of claim 4, wherein the controller is further configured to store the frequency of the communication by:
tracking the at least one item used to communicate with the at least one contact in the electronic device;
counting a frequency of usage of the at least one item associated with the at least one contact based on the tracking; and
storing the frequency of the usage of the at least one item for the at least one contact in the database.

7. The electronic device of claim 1, further comprising:
the controller configured to:
store a frequency of usage of at least one item for each application in a database;
execute the at least one application;
control a display to display the at least one item on at least part of an execution screen of the executed application, based on the frequency of the usage of the at least one item;
receive at least one interaction event for at least one content associated with the executed application; and
execute the displayed item together with the at least one content corresponding to the at least one interaction event.

8. The electronic device of Claim 7, wherein the controller further configured to:
store a frequency of usage of at least one piece of setting information for each application in a database;
receive an interaction event for executing the at least one application; and
execute the at least one application corresponding to the interaction event, based on the frequency of the usage of the at least one piece of setting information.

9. The electronic device of Claim 7, wherein the controller further configured to:
control the display to display a list including the at least one contact;
receive an event for selecting the at least one contact arranged in the list;
identify a frequency of usage of the at least one item for the at least one contact selected by the event; and
communicate with the selected contact by using the at least one item selected based on the frequency of the usage of the at least one item.

10. The electronic device of Claim 7, wherein the controller further configured to:
control the display to display a list including the at least one item;
receive an event for selecting the at least one item arranged in the list;
identify a frequency of communication with the at least one contact by using the at least one item selected by the event; and
communicate with the at least one contact selected based on the frequency of the communication by using the at least one selected item.

11. The electronic device of Claim 7, wherein the controller further configured to:
identify a frequency of usage of the at least one item for the at least one contact;
control the display to display a list including the at least one contact;
control the display to display an item having a highest frequency of usage for each contact of the at least one contact included in the list;
receive a touch event for selecting the at least one contact included in the list; and
when the touch event is a predetermined touch event, communicate with the at least one contact selected by the touch event by using the displayed item and the selected at least one contact.

12. The electronic device of Claim 7, wherein the controller further configured to: receive a touch event for the displayed item;
control the display to display an item list associated with the contact corresponding to the at least one item selected by the touch event;
receive an input for selecting one item of items included in the item list; and
change the item displayed with the corresponding contact to the item selected by the input.

13. The electronic device of Claim 7, wherein the controller further configured to:
control the display to display a list including the at least one contact;
control the display to display an item having a highest frequency of usage for each contact of the at least one contact included in the list;
receive a touch event for selecting the at least one contact included in the list; and
when the touch event is a predetermined touch event, communicate with the at least one contact selected by the touch event by using the displayed item and the selected at least one contact.

## Patentansprüche

1. Elektronische Vorrichtung (100) zum Ausführen von mindesten einem Element zur Kommunikation mit mindestens einem Kontakt, wobei die elektronische Vorrichtung aufweist:
einen Controller (102), der konfiguriert ist zum:
Speichern einer Nutzungshäufigkeit von mindestens einem Element für den mindestens einen Kontakt in einer Datenbank (114);
Anzeigen des mindestens einen Elements zusammen mit dem mindestens einen Kontakt in mindestens einer Kontaktliste der elektronischen Vorrichtung, wobei das mindestens eine Element auf Grundlage der Nutzungshäufigkeit des mindestens einen Elements zum Anzeigen aus der Datenbank ausgewählt wird,
Empfangen des mindestens einen Interaktionsereignisses, das an dem mindestens einen Kontakt in der elektronischen Vorrichtung ausgeführt wird;
Identifizieren des mindestens einen Elements zur Kommunikation mit dem mindestens einen Kontakt aus der Datenbank; und
Ausführen des mindestens einen identifizierten Elements auf Grundlage der Nutzungshäufigkeit des mindestens einen identifizierten Elements als Reaktion auf das mindestens eine Interaktionsereignis, das an dem mindestens einen Kontakt ausgeführt wird.

2. Elektronische Vorrichtung nach Anspruch 1, wobei das mindestens eine Element mindestens eine von einer Kurznachrichtendienst-Anwendung, einer Multimediadienst-Anwendung, einer E-Mail-Anwendung, einer Sofortnachrichten-Anwendung, einer sozialen Netzwerkdienst-Anwendung, einer Anrufanwendung, einer Nahbereichskommunikations-Anwendung und Langstreckenkommunikations-Anwendung aufweist.

3. Elektronische Vorrichtung nach Anspruch 1, wobei der Controller ferner zum Speichern der Nutzungshäufigkeit konfiguriert ist durch:
Verfolgen des mindestens einen Elements, das zum Kommunizieren mit dem mindestens einen Kontakt in der elektronischen Vorrichtung verwendet wird;
Zählen der Nutzungshäufigkeit des mindestens einen Elements, das dem mindestens einen Kontakt zugehörig ist, auf Grundlage des Verfolgens; und
Speichern der Nutzungshäufigkeit des mindestens einen Elements für den mindestens einen Kontakt in einer Datenbank.

4. Elektronische Vorrichtung nach Anspruch 1, ferner aufweisend: den Controller, der konfiguriert ist zum:
Speichern einer Häufigkeit der Kommunikation mit dem mindestens einen Kontakt unter Verwendung jedes Elements in einer Datenbank;
Empfangen von mindestens einem Ereignis, das an dem mindestens einen Element in der elektronischen Vorrichtung ausgeführt wird;
Identifizieren des mindestens einen Kontakts, der dem mindestens einen Element aus der Datenbank zugehörig ist, auf Grundlage der Häufigkeit der Kommunikation mit dem mindestens einen Kontakt; und
Kommunizieren mit dem mindestens einen identifizierten Kontakt unter Verwendung des mindestens einen Elements, das durch das empfangene Interaktionsereignis ausgewählt wird in Reaktion auf das empfangene Interaktionsereignis, das an dem mindestens einen Element ausgeführt wird.

5. Elektronische Vorrichtung nach Anspruch 4, wobei das mindestens eine Element mindestens eine von einer Kurznachrichtendienst-Anwendung, einer Multimediadienst-Anwendung, einer E-Mail-Anwendung, einer Sofortnachrichten-Anwendung, einer sozialen Netzwerkdienst-Anwendung, einer Anrufanwendung, einer Nahbereichskommunikations-Anwendung und Langstreckenkommunikations-Anwendung aufweist.

6. Elektronische Vorrichtung nach Anspruch 4, wobei der Controller ferner zum Speichern der Kommunikationshäufigkeit konfiguriert ist durch:
Verfolgen des mindestens einen Elements, das zum Kommunizieren mit dem mindestens einen Kontakt in der elektronischen Vorrichtung verwendet wird;
Zählen einer Nutzungshäufigkeit des mindestens einen Elements, das dem mindestens einen Kontakt auf Grundlage des Verfolgende zugehörig ist;
Speichern der Nutzungshäufigkeit des mindestens einen Elements für den mindestens einen Kontakt in der Datenbank.

7. Elektronische Vorrichtung nach Anspruch 1, ferner aufweisend: den Controller, der konfiguriert ist zum:
Speichern einer Nutzungshäufigkeit von mindestens einem Element für jede Anwendung in einer Datenbank;
Ausführen der mindestens einen Anwendung;
Steuern einer Anzeige, um das mindestens eine Element auf mindestens einem Teil eines Ausführungsbildschirms der ausgeführten Anwendung auf Grundlage der Nutzungshäufigkeit des mindestens einen Elements anzuzeigen;
Empfangen von mindestens einem Interaktionsereignis für mindestens einen Inhalt, der der ausgeführten Anwendung zugehörig ist; und
Ausführen des angezeigten Elements zusammen mit dem mindestens einen Inhalt, der dem mindestens einen Interaktionsereignis entspricht.

8. Elektronische Vorrichtung nach Anspruch 7, wobei der Controller ferner konfiguriert ist zum:
Speichern einer Nutzungshäufigkeit von mindestens einem Teil von Einstellungsinformationen für jede Anwendung in einer Datenbank;
Empfangen eines Interaktionsereignisses zum Ausführen der mindestens einen Anwendung; und
Ausführen der mindestens einen Anwendung, die dem Interaktionsereignis entspricht, auf Grundlage der Nutzungshäufigkeit des mindestens einen Teils von Einstellungsinformationen.

9. Elektronische Vorrichtung nach Anspruch 7, wobei der Controller ferner konfiguriert ist zum:
Steuern der Anzeige, um eine Liste mit dem mindestens einen Kontakt anzuzeigen;
Empfangen eines Ereignisses zum Auswählen des mindestens einen in der Liste angeordneten Kontakts;
Identifizieren einer Nutzungshäufigkeit des mindestens einen Elements für den mindestens einen Kontakt, der durch das Ereignis ausgewählt wird, und
Kommunizieren mit dem ausgewählten Kontakt unter Verwendung des mindestens einen Elements, das auf Grundlage der Nutzungshäufigkeit des mindestens einen Elements ausgewählt wird.

10. Elektronische Vorrichtung nach Anspruch 7, wobei der Controller ferner konfiguriert ist zum:
Steuern der Anzeige, um eine Liste mit dem mindestens einen Element anzuzeigen;
Empfangen eines Ereignisses zum Auswählen des mindestens einen in der Liste angeordneten Elements;
Identifizieren einer Häufigkeit der Kommunikation mit dem mindestens einen Kontakt unter Verwendung des mindestens einen Elements, das durch das Ereignis ausgewählt wird, und
Kommunizieren mit dem mindestens einen Kontakt, der auf Grundlage der Häufigkeit der Kommunikation unter Verwendung des mindestens einen ausgewählten Elements ausgewählt wird.

11. Elektronische Vorrichtung nach Anspruch 7, wobei der Controller ferner konfiguriert ist zum:
Identifizieren einer Nutzungshäufigkeit des mindestens einen Elements für den mindestens einen Kontakt;
Steuern der Anzeige, um eine Liste mit dem mindestens einen Kontakt anzuzeigen;
Steuern der Anzeige, um ein Element mit einer höchsten Nutzungshäufigkeit für jeden Kontakt des mindesten einen Kontakts anzuzeigen, der in der Liste enthalten ist;
Empfangen eines Berührungsereignisses zum Auswählen des mindestens einen Kontakts, der in der Liste enthalten ist; und
wenn das Berührungsereignis ein vorbestimmtes Berührungsereignis ist, Kommunizieren mit dem mindestens einen Kontakt, der durch das Berührungsereignis ausgewählt wird, unter Verwendung des angezeigten Elements und des ausgewählten mindestens einen Kontakts.

12. Elektronische Vorrichtung nach Anspruch 7, wobei der Controller ferner konfiguriert ist zum:
Empfangen eines Berührungsereignisses für das angezeigte Element;
Steuern der Anzeige, um eine Elementliste anzuzeigen, die dem Kontakt zugehörig ist, der dem mindestens einen durch das Berührungsereignis ausgewählten Element entspricht;
Empfangen einer Eingabe zum Auswählen eines Elements aus Elementen, die in der Elementenliste enthalten sind; und
Ändern des Elements, das mit dem entsprechenden Kontakt angezeigt wird, in das Element, das durch die Eingabe ausgewählt wurde.

13. Elektronische Vorrichtung nach Anspruch 7, wobei der Controller ferner konfiguriert ist zum:
Steuern der Anzeige, um eine Liste mit dem mindestens einen Kontakt anzuzeigen;
Steuern der Anzeige, um ein Element mit einer höchsten Nutzungshäufigkeit für jeden Kontakt des mindesten einen Kontakts anzuzeigen, der in der Liste enthalten ist;
Empfangen eines Berührungsereignisses zum Auswählen des mindestens einen Kontakts, der in der Liste enthalten ist; und
wenn das Berührungsereignis ein vorbestimmtes Berührungsereignis ist, Kommunizieren mit dem mindestens einen Kontakt, der durch das Berührungsereignis ausgewählt wird, unter Verwendung des angezeigten Elements und des ausgewählten mindestens einen Kontakts.

## Revendications

1. Appareil électronique (100) permettant l'exécution d'au moins un article de communication avec au moins un contact, l'appareil électronique comprenant :
un contrôleur (102) configuré pour :
mémoriser une fréquence d'utilisation d'au moins un article pour l'au moins un contact dans une base de données (114) ;
afficher l'au moins un article conjointement avec l'au moins un contact dans au moins un répertoire de contacts de l'appareil électronique, l'au moins un article étant sélectionné pour être affiché depuis de la base de données en fonction de la fréquence d'utilisation de l'au moins un article, recevoir au moins un événement d'interaction effectué sur l'au moins un contact dans l'appareil électronique ;
identifier l'au moins un article de communication avec l'au moins un contact dans la base de données ; et exécuter l'au moins un article identifié en fonction de la fréquence d'utilisation de l'au moins un article identifié en réponse à l'au moins un événement d'interaction effectué sur l'au moins un contact.

2. Appareil électronique selon la revendication 1, l'au moins un article comprenant au moins une des applications suivantes : application de service de messagerie SMS, application de service multimédia, application de courrier électronique, application de messagerie instantanée, application de service de réseau social, application d'appel, application de communication à courte portée, et application de communication à longue portée.

3. Appareil électronique selon la revendication 1, le contrôleur étant configuré en outre pour mémoriser la fréquence d'utilisation :
en suivant l'au moins un article utilisé pour communiquer avec l'au moins un contact dans l'appareil électronique ;
en comptant la fréquence d'utilisation de l'au moins un article associé avec l'au moins un contact sur la base du suivi ; et
en mémorisant la fréquence d'utilisation de l'au moins un article pour l'au moins un contact dans la base de données.

4. Appareil électronique selon la revendication 1, comprenant en outre la configuration du contrôleur pour :
mémoriser une fréquence de communication avec l'au moins un contact utilisant chaque article dans une base de données ;
recevoir au moins un événement exécuté sur l'au moins un article dans l'appareil électronique ;
identifier l'au moins un contact associé avec l'au moins un article de la base de contact, en fonction de la fréquence de communication avec l'au moins un contact ; et
communiquer avec l'au moins un contact identifié en utilisant l'au moins un article sélectionné par l'évènement d'interaction reçu, en réponse à l'évènement d'interaction reçu exécuté sur l'au moins un article.

5. Appareil électronique selon la revendication 4, l'au moins un article comprenant au moins une des applications suivantes : application de service de messagerie SMS, application de service multimédia, application de courrier électronique, application de messagerie instantanée, application de service de réseau social, application d'appel, application de communication à courte portée, et application de communication à longue portée.

6. Appareil électronique selon la revendication 4, le contrôleur étant configuré en outre pour mémoriser la fréquence de communication
en suivant l'au moins un article utilisé pour communiquer avec l'au moins un contact dans l'appareil électronique ;
en comptant la fréquence d'utilisation de l'au moins un article associé avec l'au moins un contact sur la base du suivi ; et
en mémorisant la fréquence d'utilisation de l'au moins un article pour l'au moins un contact dans la base de données.

7. Appareil électronique selon la revendication 1, comprenant en outre la configuration du contrôleur pour :
mémoriser une fréquence d'utilisation avec l'au moins un contact utilisant chaque article dans une base de données ;
exécuter l'au moins une application ;
commander à un dispositif d'affichage d'afficher au moins un article sur au moins une partie d'un écran d'exécution de l'application exécutée, en fonction de la fréquence d'utilisation de l'au moins un article ;
recevoir au moins un événement d'interaction pour au moins un contenu associé avec l'application exécutée ; et
exécuter l'article affiché conjointement avec l'au moins un contenu correspondant à l'au moins un événement d'interaction.

8. Appareil électronique selon la revendication 7, le contrôleur étant configuré en outre pour :
mémoriser une fréquence d'utilisation d'au moins une information de configuration pour chaque application dans une base de données ;
recevoir un événement d'interaction pour l'exécution de l'au moins une application ; et
exécuter l'au moins une application correspondant à l'événement d'interaction en fonction de la fréquence d'utilisation de l'au moins une information de configuration.

9. Appareil électronique selon la revendication 7, le contrôleur étant configuré en outre pour :
commander au dispositif d'affichage d'afficher une liste comprenant l'au moins un contact ;
recevoir un événement pour la sélection de l'au moins un contact agencé dans la liste ;
identifier une fréquence d'utilisation de l'au moins un article pour l'au moins un contact sélectionné par l'événement ; et
communiquer avec le contact sélectionné en utilisant l'au moins un article sélectionné en fonction de la fréquence d'utilisation de l'au moins un article.

10. Appareil électronique selon la revendication 7, le contrôleur étant configuré en outre pour :
commander au dispositif d'affichage d'afficher une liste comprenant l'au moins un article ;
recevoir un événement pour la sélection de l'au moins un article agencé dans la liste ;
identifier une fréquence de communication avec l'au moins un contact en utilisant l'au moins un article sélectionné par l'événement ; et
communiquer avec l'au moins un contact sélectionné en fonction de la fréquence de communication en utilisant l'au moins un article sélectionné.

11. Appareil électronique selon la revendication 7, le contrôleur étant configuré en outre pour :
identifier une fréquence d'utilisation de l'au moins un article pour l'au moins un contact ;
commander au dispositif d'affichage d'afficher une liste comprenant l'au moins un contact ;
commander au dispositif d'affichage d'afficher un article présentant la fréquence d'utilisation la plus élevée pour chaque contact de l'au moins un contact compris dans la liste ;
recevoir un événement tactile pour la sélection de l'au moins un contact compris dans la liste ; et
lorsque l'événement tactile est un événement tactile prédéterminé, communiquer avec l'au moins un contact sélectionné par l'événement tactile en utilisant l'article affiché et l'au moins un contact sélectionné.

12. Appareil électronique selon la revendication 7, le contrôleur étant configuré en outre pour :
recevoir un événement tactile pour l'article affiché ;
commander au dispositif d'affichage d'afficher une liste d'articles associée avec le contact correspondant à l'au moins un article sélectionné par l'événement tactile ;
recevoir une entrée pour la sélection d'un article des articles compris dans la liste d'articles ; et
remplacer l'article affiché par le contact correspondant à l'article sélectionné par l'entrée.

13. Appareil électronique selon la revendication 7, le contrôleur étant configuré en outre pour :
commander au dispositif d'affichage d'afficher une liste comprenant l'au moins un contact ;
commander au dispositif d'affichage d'afficher un article présentant la fréquence d'utilisation la plus élevée pour chaque contact de l'au moins un contact compris dans la liste ;
recevoir un événement tactile pour la sélection de l'au moins un contact compris dans la liste ; et
lorsque l'événement tactile est un événement tactile prédéterminé, communiquer avec l'au moins un contact sélectionné par l'événement tactile en utilisant l'article affiché et l'au moins un contact sélectionné.
